**Europäisches Patentamt**

**European Patent Office**

**Office européen des brevets**

(19)

(11) Veröffentlichungsnummer : **0 123 918**
**B1**

(12) # EUROPÄISCHE PATENTSCHRIFT

(45) Veröffentlichungstag der Patentschrift :
**20.01.88**

(51) Int. Cl.⁴ : **B 23 C   5/26**

(21) Anmeldenummer : **84103476.2**

(22) Anmeldetag : **29.03.84**

(54) **Fräs- und Spanndorn.**

(30) Priorität : **31.03.83 CH 1806/83**

(43) Veröffentlichungstag der Anmeldung :
**07.11.84 Patentblatt 84/45**

(45) Bekanntmachung des Hinweises auf die Patenterteilung : **20.01.88 Patentblatt 88/03**

(84) Benannte Vertragsstaaten :
**AT DE FR GB IT NL SE**

(56) Entgegenhaltungen :
**CH-A-   247 281**
**CH-A-   347 697**
**CH-A-   484 713**
**GB-A- 1 000 005**
**US-A- 3 136 217**
**US-A- 3 269 271**

(73) Patentinhaber : **Wiederkehr, Hans, Dr.**
**Ifangstrasse 107**
**CH-8153 Rümlang (CH)**

(72) Erfinder : **Wiederkehr, Hans, Dr.**
**Ifangstrasse 107**
**CH-8153 Rümlang (CH)**

(74) Vertreter : **Meyer, Reinhard, Dipl.-Ing.**
**c/o Dr. A. R. Egli & Co. Patentanwälte Horneggstrasse 4**
**CH-8008 Zürich (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Fräs- und Spanndorn nach dem Oberbegriff des Patentanspruchs 1.

Fräs- und Spanndorne sind in verschiedenen Ausführungen bekannt. Sie stellen ein viel verwendetes Werkzeug dar, an dem Fräswerkzeuge und andere Werkzeuge in beliebiger Form und Ausbildung befestigt werden können. Damit der Fräs- und Spanndorn den an ihn gestellten Anforderungen genügen kann, muss er sehr genau auf der Werkzeugmaschinenspindel befestigt werden. Durch internationale Normung wurde erreicht, dass das werkzeugseitige Ende einer Spindel in ganz bestimmter Weise ausgebildet ist. Wesentlich ist hierbei, dass die Spindel eine durchgehende, zentrale Bohrung aufweist, die am werkzeugseitigen Ende in eine konische Bohrung übergeht. Diese konische Bohrung wird mit hoher Genauigkeit hergestellt, und es wird hierbei darauf geachtet, dass der Konus sowohl bezüglich des Rundlaufes als auch bezüglich der Formgenauigkeit recht hohen Ansprüchen genügt. In diese konische Bohrung wird der Fräsdorn, der eine konische Wellenpartie mit denselben Massen besitzt, eingeführt und durch eine Zugstange gespannt, die auf der, der Werkzeugseite der Maschinenspindel abgewandten Stirnseite eingeführt wird und den Fräsdorn fest in die konische Bohrung der Maschinenspindel zieht. Das vordere, aus der Maschinenspindel herausragende Ende des Fräsdorns weist einen Befestigungsflansch auf, auf den das Werkzeug mittels einer zylindrischen Nabe zentriert und durch eine Spannschraube fest auf den Befestigungsflansch des Fräsdorns gepresst wird.

Diese Art der Werkzeugbefestigung sollte eigentlich eine gute Voraussetzung für eine starre, genau zentrierte und einwandfreie Verbindung zwischen dem Werkzeug und der Maschinenspindel bilden. Die Praxis zeigt jedoch, dass damit keine ausreichende Lagegenauigkeit des Fräswerkzeuges erreicht wird. Die konische Bohrung der Maschinenspindel wird im Betrieb früher oder später durch Fremdkörper und Staub beschädigt. Dasselbe trifft auch für die konische Wellenpartie des Fräsdorns zu, so dass die genaue Lage zwischen Maschinenspindel und Fräsdorn ungenau werden kann. Selbst wenn der Fräser exakt auf dem Befestigungsflansch befestigt ist, tritt das bekannte Rattern des Werkzeuges ein, das unsaubere Oberflächen, eine vorzeitige Abnützung des Werkzeuges und eine grössere Antriebsleistung für das Werkzeug zur Folge hat, auch wenn der Vorschub entsprechend kleingehalten wird.

Zur Behebung dieser Mängel wurde ein Fräsdorn vorgeschlagen (CH-PS 484 713) bei dem zur Befestigung des Dorns ebenfalls die konische Bohrung der Maschinenspindel benützt wird. Im Unterschied zu anderen bekannten Fräsdornen wird dort die konische Wellenpartie als konische Hülse ausgeführt und auf die Fräsdornwelle aufgeschoben und mittels einer Federung auf der Rückseite des Befestigungsflansches abgestützt. Wird nun der Dorn durch die Zugstange der Maschinenspindel zurückgezogen, nimmt die konische Hülse die entsprechende Lage in der konischen Bohrung ein, während der Befestigungsflansch mit der Dornwelle soweit zurückgezogen werden kann, dass er stirnseitig auf der Maschinenspindel aufliegt. Trotz der scheinbar einwandfreien Lagerung zeigt die Praxis, dass mit einem solchen Fräsdorn nur eine geringe Verbesserung gegenüber den bekannten Fräsdornen erreicht wird und insbesondere das Rattern des Werkzeuges, eine unsaubere Oberfläche und die vorzeitige Werkzeugabnützung nicht verhindert werden können. Dies hängt vermutlich damit zusammen, dass der Konus für die Lagerung des Fräsdorns, der im Betrieb leicht beschädigt wird oder sich abnützt, nicht mehr mit der Auflagefläche des Befestigungsflansches übereinstimmt. Zudem kommt hinzu, dass die Spannschraube zum Befestigen des Fräsers mit ihrem Kopf direkt auf dem Fräser aufliegt und beim Spannen wegen der Steigung des Gewindes schiefgezogen wird, so dass auch hier keine einwandfreie Halterung vorliegt.

Bei einer weiteren bekannten den Ausgangspunkt bildenden Spannvorrichtung (CH-PS 347 697) wird das Werkzeug auf einem Befestigungsflansch befestigt, welcher mit seiner Stirnfläche auf der Stirnfläche des Spindelkopfes liegt und diesen koaxial mit einer Zylinderfläche genau passend umgreift. Nachteilig ist jedoch, dass das Werkzeug mittels einer Spannhülse auf dem Befestigungsflansch gespannt wird, in welcher die Zugstange der Arbeitsspindel eingeschraubt ist. Beim Spannen der Spannhülse kann diese tiefgezogen werden, weshalb wegen der direkten Auflage des Kopfes der Spannhülse auf dem Werkzeug keine einwandfreie Halterung erreicht wird.

Beiden bekannten Ausführungen haftet zudem der Nachteil an, dass sie in ihren Einzelteilen an der Arbeitsstelle montiert werden müssen und dehalbkeine optimale Montagebedingungen vorliegen.

Hier setzt die Erfindung ein, der die Aufgabe zugrundeliegt, einen Fräs- und Spanndorn so auszugestalten, dass unter Vermeidung der Nachteile der bekannten Ausführungen das Werkzeug mit dem Fräs- und Spanndorn lagerichtig zentriert und festgespannt werden kann.

Diese Aufgabe wird gemäss der Erfindung durch die kennzeichnenden Merkmale des Patentanspruches 1 gelöst.

Die Erfindung ist in der Zeichnung in zwei Ausführungsbeispielen dargestellt und nachfolgend beschrieben. Es zeigen :

Fig. 1 einen Längsschnitt eines Fräsdorns, der auf der linken Figurenhälfte die Aufspannung eines Stirnfräsers mit geringer und auf der rechten Figurenhälfte mit grösserer Breite zeigt, und

Fig. 2 eine Seitenansicht des Fräsdorns nach Fig. 1, jedoch mit einer Aufnahme für einen Stirnfräser grossen Durchmessers.

Die Erfindung geht von der Ueberlegung aus, dass es zur Vermeidung der Mängel bei den bekannten Fräsdornen erforderlich ist, das Werkzeug zwischen zwei genau parallelen Planflächen, die beim Spannen nicht schiefgezogen werden können, mit so hohem axialen Druck festzuspannen, dass ein Leistungsfräsen in beiden Drehrichtungen zuverlässig durchgeführt werden kann. Mit dem in den Figuren dargestellten Fräsdornen kann diese Forderung in idealer Weise erfüllt werden.

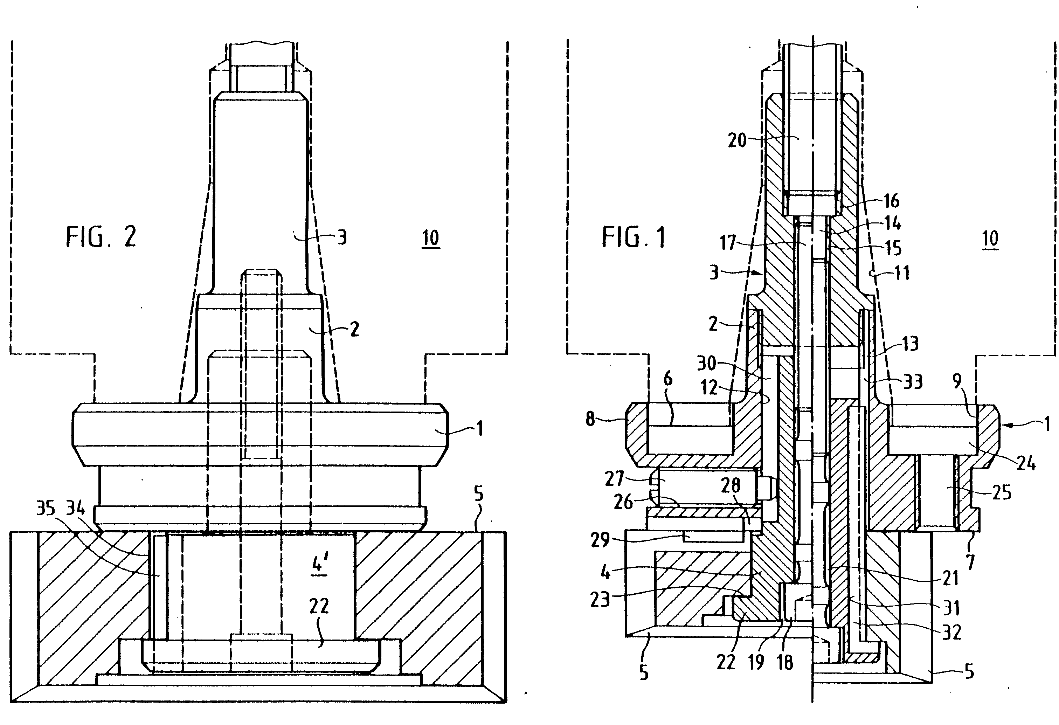

Der Fräsdorn nach Fig. 1 setzt sich aus einem Befestigungsflansch 1 mit einem rückseitig angeordneten Haltekragen 2, einem Spannstutzen 3 und einem Aufnahmebolzen 4 für die Zentrierung eines Werkzeuges, z. B. eines Stirnfräsers 5, zusammen.

Der Befestigungsflansch 1 weist eine rückseitige Auflagefläche 6 und eine dazu parallele, auf der entgegengesetzten Stirnseite angeordnete Werkzeugauflagefläche 7 auf. Am Aussenumfang der rückseitigen Auflagefläche 6 schliesst ein Kragen 8 mit einer innenliegenden Zylinderfläche 9 an.

In Fig. 1 ist gestrichelt das werkzeugseitige Ende einer Maschinenspindel dargestellt, die in einer Werkzeugmaschine (nicht dargestellt) gelagert ist. Hierbei liegt die rückseitige Auflagefläche 6 des Befestigungsflansches 1 auf der Stirnseite der Maschinenspindel 10 auf, während die Zylinderfläche 9 sich auf dem Ende der Maschinenspindel 10 zentriert. Die Maschinenspindel 10 weist die genormte konische Bohrung 11 auf, die jedoch zum Haltern und Zentrieren des Fräsdorns nach Fig. 1 nicht benützt wird, da sich der Haltekragen 2 mit Spiel in diese Bohrung 11 erstreckt.

Der Befestigungsflansch 1 weist eine sich durch den Haltekragen 2 erstreckende Durchgangsbohrung 12 auf, die an ihrem spindelseitigen Ende ein Innengewinde 13 aufweist, in das der Spannstutzen 3 eingeschraubt ist. Der Spannstutzen 3 weist eine Axialborhung 14 auf, die mit zwei Innengewinden 15, 16 versehen ist. Das werkzeugseitige Innengewinde 15 dient zum Spannen einer Spannschraube 17, die als Dehnschraube ausgebildet ist und deren Kopf 18 in einer Vertiefung 19 der werkzeugseitigen Stirnseite des Aufnahmebolzens 4 liegt. Das spindelseitige Innengewinde 16 dient zum Spannen des Fräsdorns auf der Maschinenspindel 10. Hierzu wird eine zur Maschinenspindel 10 gehörende Zugstange 20 in das Innengewinde 16 eingeschraubt und dadurch der Befestigungsflansch mit seiner rückseitigen Auflagefläche auf die Stirnseite der Maschinenspindel 10 gespannt.

Der Aufnahmebolzen 4 weist eine Axialbohrung 21 auf, durch die sich die Spannschraube 17 erstreckt. Der Aufnahmebolzen 4 ist spielfrei in der Durchgangsbohrung 12 verschiebbar eingepasst und weist an seiner werkzeugseitigen Stirnseite einen Aufnahmeflansch 22 auf, der an der gegen den Befestigungsflansch 1 gerichteten Seite eine plane Fläche 23 bildet. Da beim Festspannen des Werkzeugs 5 mit der Spannschraube 17 keine verformenden Kräfte auf den Aufnahmeflansch 22 ausgeübt werden, stellen die plane Fläche 23 und die Werkzeugaufnahmefläche 7 zwei exakt parallele Planflächen dar, zwischen denen das Werkzeug 5 schlagfrei zentriert werden kann. Dadurch, dass die als Dehnschraube ausgebildete Spannschraube 17 mit ihrem Kopf 18 sich nicht auf das Werkzeug 5 abstützt, können sehr grosse Axialkräfte erzeugt werden, ohne dass die Gefahr einer Ueberbeanspruchung der Spannschraube 17 bei der Erwärmung und der damit verbundenen Ausdehnung des Werkzeugs 5 bestehen würde.

Der Aufnahmebolzen 4 auf der linken Figurenhälfte der Fig. 1 zeigt unterschiedliche Durchmesser im Bereich der Durchgangsbohrung und im Bereich des Werkzeugs 5, während der Aufnahmebolzen auf der rechten Figurenhälfte durchgehend denselben Durchmesser aufweist. Dies zeigt, dass lediglich durch die Auswechslung des Aufnahmebolzens 4 Werkzeuge verschiedener Form festgespannt werden können.

Im Befestigungsflansch 1 und im Aufnahmebolzen 4 sind verschiedene Nuten, Vertiefungen und Bohrungen vorgesehen, mit Hilfe welcher der Fräsdorn und der Fräser gegen eine Verdrehung gesichert werden. Hierzu dienen Vertiefungen 24 in der rückseitigen Auflagefläche 6 des Befestigungsflansches 1, axiale Gewindebohrungen 25 und eine radiale Gewindebohrung 26 im Befestigungsflansch 1, letztere Bohrung zur Aufnahme eines Stellbolzens 27, eine oder zwei Radialnuten 28 in der Werkzeugauflagefläche 7 zur Aufnahme von Radialkeilen 29 und im Aufnahmebolzen 4 eine Längsnut 30 zum Zusammenwirken mit dem Stellbolzen 27 oder eine Keilnut 31 zur Aufnahme eines Keils 32, der zur Verdrehsicherung sowohl des Werkzeugs 5 als auch des Aufnahmebolzens in einer Keilnut 33 in der Durchgangsbohrung 12 liegt. In Fig. 2 ist der Fräsdorn nach Fig. 1 dargestellt, dessen Befestigungsflansch 1 und Spannstutzen 3 gleiche Teile sind wie beim Fräsdorn nach Fig. 1. Lediglich der Aufnahmebolzen 4 weist werkzeugseitig einen Bolzenteil 4' auf, der zur Aufnahme eines Fräsers grossen Durchmessers dient. Der Bolzenteil 4' weist ebenfalls den Aufnahmeflansch 22 auf, so dass auch hier der Fräser in der gleich optimalen Weise gespannt werden kann. Der Fräser 5 ist hier mit einer Längskeilnut 34 versehen, in die ein Längskeil 35 ragt, der in einer entsprechenden Axialnut des Bolzenteils 4 gelagert ist.

Dadurch, dass der beschriebene Fräsdorn schlagfrei stirnseitig auf der Maschinenspindel 10 aufgespannt und zentriert werden kann, wird ein sehr genauer Rundlauf gewährleistet. Dieser ergibt eine längere Standzeit des Werkzeuges, einen geringeren Kraftverbrauch und geringere Schärfkosten. Durch den Formschluss bei der Abstützung des Werkzeugs 5 auf der grossen stirnseitigen Planfläche der Maschinenspindel 10 wird eine höhere Oberflächengüte erreicht und zudem wird das Rattern des Werkzeugs vermieden. Weiter kann das Werkzeug mit grosser Axialkraft gespannt werden, unabhängig von der Form des Werkzeugs 5 und ohne Verziehen der Einspannung desselben. Wegen der genau definnierten Auflage des Befestigungsflansches 1 und der ebenso genau definierten Auflage des Werkzeugs 5 auf dem Befestigungsflansch 1 eignet sich der beschriebene Fräs- und Spanndorn besonders für voreinstellbare Werkzeuge bei NC und CNC Maschinen, da beim Werkzeugwechsel immer die exakten Einstellmasse erreicht werden. Durch das exakte Spannen mit sehr grossen Kräften können in Verbindung mit dem einwandfreien Formschluss Schnittgeschwindigkeiten erreicht werden, die mindestens 50 % über den herkömmlichen Schnittgeschwindigkeiten der bekannten Fräsdorne liegen. Damit ist eine höhere Spanleistung und eine längere Standzeit des Werkzeugs 5 und der Maschinenspindel 10 verbunden. Da nur der Aufnahmebolzen 4 dem Werkzeug angepasst werden muss, kann der beschriebene Fräs- und Spanndorn für mindestens vier verschiedene Fräserbohrungen verwendet werden. Die Durchgangsbohrung 12 bleibt hierbei unverändert, deren Durchmesser zum Durchmesser des Befestigungsflansches 1 vorzugsweise ein Verhältnis von 1 : 5, bis 1 : 2,5, vorzugsweise 1 : 4 bis 1 : 3 aufweist.

Der beschriebene Fräs- und Spanndorn kann auch für die Befestigung anderer Werkzeuge als für Fräswerkzeuge u. dgl. verwendet werden. Wegen des starren Formschlusses ist es beispielsweise möglich, eine Bohrstangenverlängerung zu befestigen, um damit Bohr-, Ausdreh- und Schabe-Arbeiten auszuführen.

## Patentansprüche

1. Fräs- und Spanndorn zum Aufspannen und Zentrieren eines Werkzeugs, insbesondere eines Fräswerkzeugs (5), an der Spindel (10) einer Werkzeugmaschine, dessen Befestigungsflansch (1) eine Durchgangsbohrung (12) und spindelseitig einen Kragen (2) sowie eine stirnseitige, zu einer werkzeugseitigen Werkzeugauflagefläche (7) parallele Auflagefläche (6) und eine innenliegende Zylinderfläche (9) aufweist, welche Flächen sowohl mit der Stirnseite als auch mit der daran anschliessenden Aussenumfangsfläche der Maschinenspindel (10) zusammenzuwirken bestimmt sind, dadurch gekennzeichnet, dass der Kragen (2) des Befestigungsflansches (1) ein Haltezylinder ist und als Stütze für einen Spannstutzen (3) ausgebildet ist, welcher die Spannmutter für eine das Fräswerkzeug (5) und den Befestigungsflansch (1) zusammenspannende Spannschraube (17) bildet.

2. Fräs- und Spanndorn nach Anspruch 1, dadurch gekennzeichnet, dass im Haltezylinder (2) ein Innengewinde (13) angeordnet ist, in welches der Spannstutzem (3) eingeschraubt ist und sich stirnseitig abstützt.

3. Fräs- und Spanndorn nach Anspruch 2, dadurch gekennzeichnet, dass der Spannstutzen (3) zwei Innengewinde (15, 16) aufweist, wovon das werkzeugseitige Gewinde (15) zur Aufnahme der Spannmutter (17) zum Spannen des Werkzeugs (5) und das maschinenseitige Gewinde (16) zur Aufnahme einer sich durch die Werkzeugspindel (10) erstreckenden Zustange (20) dient.

4. Fräs- und Spanndorn nach Anspruch 1, dadurch gekennzeichnet, dass in der Durchgangsbohrung (12) ein verschiebbarer Aufnahmebolzen (4) mit einem über die Werkzeugauflagefläche ragenden Bolzenteil (4') zur Aufnahme und Zentrierung des Werkzeuges (5) spielfrei gelagert ist, an dessen werkzeugseitiger Stirnseite der Kopf (18) der Spannschraube (17) abgestützt ist.

5. Fräs- und Spanndorn nach Anspruch 1 bis 4, dadurch gekennzeichnet, dass die Spannschraube (17) zum Spannen des Werkzeugs (5) mit Hilfe des Aufnahmebolzens (4) eine sich in den Bereich des Haltekragens (2) erstreckende Dehnschraube ist.

## Claims

1. Cutter arbor and mandrel for setting up and centring a tool, particularly a milling cutter (5) on the spindle (10) of a machine tool the fixing flange (1) of which has a through bore (12) and which has on the spindle side a collar (2) as well as a front face seating surface (6) parallel to a toolwards tool seating surface (7) and an inner lying cylindrical surface (9), which surfaces are defined to cooperate both with the face side and also with the adjacent outer peripheral surface of the machine spindle (10) characterised in that the collar (2) of the fixing flange (1) is a holding cylinder and is constructed as a support for a tensioning post (3) which constitutes the tensioning nut for a tensioning bolt (17) holding the milling cutter (5) and the fixing flange (1) together.

2. Cutter arbor and mandrel according to claim 1 characterised in that in the holding cylinder (2) an intrior thread (13) is arranged into which the tensioning post (3) is screwed and which is supported on its end face.

3. Cutter arbor and mandrel according to claim 2 characterised in that the tensioning post (3) has two interior threads (15, 16) of which the toolwards thread (15) serves for the receipt of the tensioning nut (17) for tensioning the tool (5) and the machinewards thread (16) for the receipt of a tensioning rod (20) extending through the tool spindle (10).

4. Cutter arbor and mandrel according to claim 1 characterised in that in the through bore (12) there is mounted in play free fashion a slidable seating bolt (4) with a bolt part (4') projecting above the tool mounting surface for seating and centring the tool (5), on the toolwards end face of which the head (18) of the tensioning bolt (17) is supported.

5. Cutter arbor and mandrel according to claims 1 to 4 characterised in that the tensioning bolt (17) for tensioning the tool (5) with the aid of the seating bolt (4) is an extension bolt extending into the region of the holding collar (2).

### Revendications

1. Mandrin de fraisage et de serrage pour le serrage et le centrage d'un outil, notamment d'un outil de fraisage (5), sur la broche (10) d'une machine-outil dont la bride de fixation (1) présente un trou débouchant (12) et côté broche un collet (2) ainsi qu'une surface d'appui (6) frontale, parallèle à une surface d'appui d'outil (7) côté outil et une surface cylindrique (9) intérieure, ces surfaces étant destinées à coopérer avec la face frontale et avec la surface périphérique extérieure de la broche de machine (10) prolongeant la première, caractérisé en ce que le collet (2) de la bride de fixation (1) est un cylindre de retenue et sert d'appui à un tube de serrage (3) qui forme l'écrou de serrage d'une vis de serrage (17) serrant l'outil de fraisage (5) et la bride de fixation (1).

2. Mandrin de fraisage et de serrage selon la revendication 1, caractérisé en ce qu'il est prévu dans le cylindre de retenue (2) un taraudage (13), dans lequel le tube de serrage (3) est vissé et prend appui frontalement.

3. Mandrin de fraisage et de serrage selon la revendication 2, caractérisé en ce que le tube de serrage (3) présente deux taraudages (15, 16), le taraudage (15) côté outil servant à recevoir la vis de serrage (17) pour le serrage de l'outil (5) et le taraudage (16) côté machine à recevoir un tirant (20) traversant la broche de machine (10).

4. Mandrin de fraisage et de serrage selon la revendication 1, caractérisé en ce qu'il est monté sans Jeu un boulon de support (4), pouvant se déplacer dans le trou débouchant (12) et présentant une partie de boulon (4') faisant saillie par rapport à la surface d'appui de l'outil, destiné à recevoir et à centrer l'outil (5), la tête (18) de la vis de serrage (17) prenant appui sur sa face frontale côté outil.

5. Mandrin de fraisage et de serrage selon les revendications 1 à 4, caractérisé en ce que la vis de serrage (17) permettant de serrer l'outil (5) à l'aide du boulon de support (4) est une vis à tige allégée s'étendant dans la zone du collet de retenue (2).

FIG. 1

FIG. 2